(19) **Europäisches Patentamt**

**European Patent Office**

**Office européen des brevets**

(11) **EP 1 027 241 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **99911586.8**

(22) Anmeldetag: **06.02.1999**

(51) Int Cl.:
**B60T 8/00** $^{(2006.01)}$

(86) Internationale Anmeldenummer:
**PCT/DE1999/000325**

(87) Internationale Veröffentlichungsnummer:
**WO 1999/064279 (16.12.1999 Gazette 1999/50)**

(54) **VERFAHREN UND VORRICHTUNG ZUR ABSCHÄTZUNG VON DRUCK- ODER VOLUMENÄNDERUNGEN IN EINEM HYDRAULIKSYSTEM**

METHOD AND DEVICE FOR ESTIMATING PRESSURE OR VOLUME CHANGES IN A HYDRAULIC SYSTEM

PROCEDE ET DISPOSITIF POUR ESTIMER CHANGEMENTS DE PRESSION OU VOLUME DANS UN SYSTEME HYDRAULIQUE

(84) Benannte Vertragsstaaten:
**DE GB**

(30) Priorität: **05.06.1998 DE 19825139**

(43) Veröffentlichungstag der Anmeldung:
**16.08.2000 Patentblatt 2000/33**

(73) Patentinhaber: **ROBERT BOSCH GMBH**
**70442 Stuttgart (DE)**

(72) Erfinder:
• **HAEUSSLER, Alexander**
**D-70192 Stuttgart (DE)**

• **WISS, Helmut**
**D-71696 Möglingen (DE)**

(56) Entgegenhaltungen:
DE-A- 3 404 135  DE-A- 4 030 724
DE-A- 4 340 921  US-A- 5 662 388

• **PATENT ABSTRACTS OF JAPAN vol. 017, no. 268 (M-1416), 25. Mai 1993 & JP 05 004572 A (MAZDA MOTOR CORP), 14. Januar 1993**
• **PATENT ABSTRACTS OF JAPAN vol. 017, no. 201 (M-1399), 20. April 1993 & JP 04 345564 A (NISSAN MOTOR CO LTD), 1. Dezember 1992**

**Beschreibung**

Stand der Technik

Die vorliegende Erfindung betrifft ein Verfahren und eine Vorrichtung zur Abschätzung von Druck- und/oder Volumenänderungen in einem Hydrauliksystem mit zwei peripheren Volumenspeichern, die durch je ein Ventil mit einem zentralen Volumenspeicher verbunden sind, mit Hilfe eines Hydraulikmodells, d. h. ein Verfahren zur Abschätzung von Druck- und/oder Volumenänderungen dieses Systems in Reaktion auf äußere Veränderungen.

Solche Verfahren werden insbesondere in Bremskraftregel- oder Antiblockiersystemen für Kraftfahrzeuge eingesetzt. Ein solches Bremskraftregelsystem ist auch Gegenstand der Erfindung. Derartige Systeme sind zum Beispiel aus DE 43 40 921 A1, DE 40 12 167 oder DE 40 30 724 bekannt.

Die Dokumente JP-04345564 und JP-05004572 offenbaren jeweils ein Verfahren zum Abschätzen von Druckdifferensen in einem Hydrauliksystem.

Das Bremssystem eines Kraftfahrzeuges bildet ein Hydrauliksystem mit einem Hauptbremszylinder, an den ggf. eine Förderpumpe angeschlossen ist, Bremskammern in den Fahrzeugrädern und einem als Bremskreis bezeichneten Leitungssystem, das eine Druckleitung umfaßt, welche ein Umschaltventil am Auslaß des Hauptbremszylinders mit Einlaßventilen der Bremskammern verbindet. Dabei können die Radbremskammern als periphere Volumenspeicher und die Druckleitung als ein zentraler Volumenspeicher des Hydrauliksystems aufgefaßt werden.

Das Bremskraftregelsystem ist eine zyklisch arbeitende elektronische Schaltung, die über Sensoren den Druck in dem Hauptbremszylinder sowie die Bewegungseigenschaften der Räder erfaßt und durch Ansteuern der am Bremskreis zwischen dem Hauptbremszylinder und den Radbremskammern angeordneten Ventile versucht, einen Bremsdruck einzustellen, mit dem gewünschte Bewegungseigenschaften der Räder wie etwa Drehgeschwindigkeit oder Schlupf möglichst genau erreicht werden. Dabei können die Ventile, die den Hauptbremszylinder mit den Radbremskammern verbinden, unabhängig voneinander gesteuert werden, und es kann zu Situationen kommen, in denen die Drücke in der Druckleitung des Bremskreises und in zwei Radbremskammern jeweils unterschiedlich sind.

Um die Bewegungseigenschaften der Räder in der gewünschten Weise zu regeln, ist es erforderlich, den sich in Folge einer Druckänderung in der Druckleitung des Bremskreises in den Radbremskammern einstellenden Druck abschätzen zu können. Die zyklische Arbeitsweise der Regelschaltung führt dabei zu dem Problem, daß die Regelschaltung nur in bestimmten Zeitabständen neue Werte der zu berücksichtigenden Parameter erfassen kann.

Die von der Schaltung vorgenommene Regelung muß sich an diesen Parameterwerten so lange orientieren, bis neue zur Verfügung stehen; tatsächlich ändern sich die Werte dieser Parameter aber fortlaufend zwischen zwei Erfassungszeitpunkten. Systematische Fehler bei der Regelung sind die Folge.

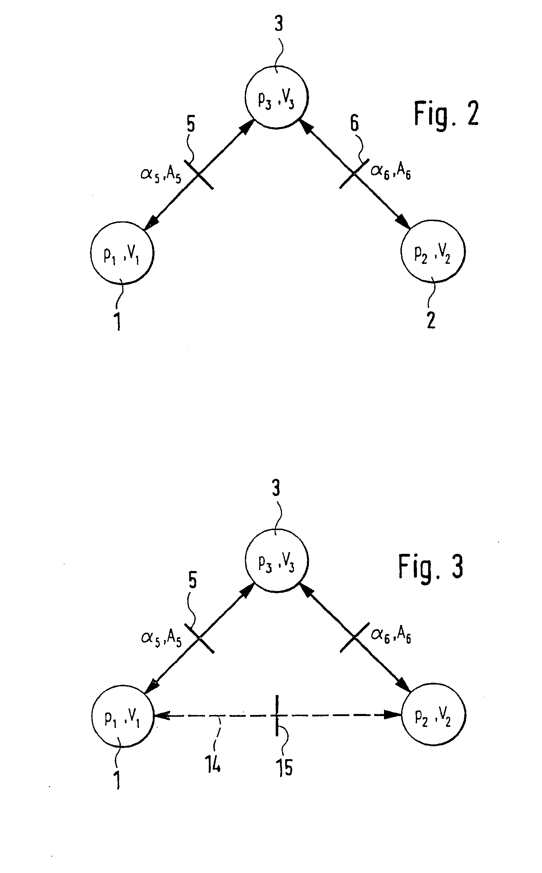

Dies wirkt sich bei einem Hydrauliksystem wie in Fig. 2 schematisch gezeigt insbesondere bei der Modellierung von Situationen aus, in denen in den Radbremskammern bzw. peripheren Volumenspeichern 1, 2 unterschiedliche Drücke $p_1$, $p_2$ herrschen, wobei $p_1 < p_2$ angenommen wird. Wenn der Druck $p_3$ in der Druckleitung bzw. im zentralen Volumenspeicher 3 im Intervall [$p_1$, $p_2$] liegt, so ergibt sich im realen System ein Volumenstrom durch die geöffneten Ventile 5, 6 von der druckhöheren 2 in die druckniedrigere Radbremskammer 1 über die dazwischenliegende Druckleitung 3. Herkömmliche Hydraulikmodelle sind nicht in der Lage, dies zu berücksichtigen. Sie berechnen anhand der zu Beginn eines Arbeitszyklus des Modells vorliegenden Druckwerte $p_1$ und $p_3$ einen Volumenstrom $q_{13}$ zwischen den Speichern 1 und 3 sowie anhand der Druckwerte $p_2$ und $p_3$ einen Volumenstrom $q_{23}$ zwischen den Speichern 2 und 3. Dabei ist es nicht möglich, während des Arbeitszyklus bereits den Einfluß des Volumenstroms $q_{13}$ auf den Volumenstrom $q_{23}$ und umgekehrt zu berücksichtigen.

Besonders deutlich wird das Problem z. B. im Fall $p_1 = p_3 < p_2$. Hier ergibt das herkömmliche Modell im ersten Zyklus überhaupt keinen Volumenaustausch zwischen den Speichern 1 und 3. Der Volumenstrom $q_{23}$ von der Radbremskammer 2 in die Druckleitung 3 wird vom Modell so behandelt, als ob er während dieses Zyklus in der Druckleitung gespeichert bliebe. Die dadurch verursachte Druckerhöhung in der Druckleitung 3 ergibt erst im Folgezyklus einen Volumenstrom in die Radbremskammer 1. Gleichzeitig führt die Vernachlässigung des Abflusses von Volumen von der Druckleitung 3 in die Radbremskammer 1 dazu, daß im Folgezyklus ein unrealistisch hoher Druck im zentralen Speicher angenommen wird und der Volumenstrom vom Speicher 2 in den Speicher 3 dementsprechend zu klein berechnet wird. Das Modell hinkt hinter der tatsächlichen Situation hinterher, was die Qualität des Modells und folglich auch die einer auf dem Modell basierenden Druckregelung in den Bremskammern beeinträchtigt. Dieses Problem ist dann besonders störend, wenn das Volumen des zentralen Speichers kleiner ist als das der peripheren. Dies ist regelmäßig der Fall, wenn der zentrale Speicher eine Leitung ist, wie im hier betrachteten Fall. Dann genügt nämlich bereits ein sehr kleines ausgetauschtes Volumen, um die Druckdifferenz zwischen dem druckhöherem der peripheren Volumenspeicher und dem zentralen Volumenspeicher im Modell scheinbar auszugleichen, und entsprechend liefert die Berechnung nach dem Modell nur einen kleinen Wert für das ausgetauschte Volumen. Das zum Druckausgleich zwischen den peripheren Speichern tatsächlich auszutauschende Volumen kann demgegenüber wesentlich größer sein, was dazu führt, daß das Modell nur sehr langsam gegen korrekte Druckwerte konvergiert.

Aufgabe der Erfindung ist, ein Verfahren und/oder eine Vorrichtung zur Abschätzung von Druck- und/oder Volumenänderungen in einem Hydrauliksystem mit zwei mit einem zentralen Volumenspeicher verbundenen peripheren Volumenspeichern anzugeben, das auf Druckdifferenzen zwischen den peripheren Volumenspeichern schneller zu reagieren vermag als bekannte Verfahren. Insbesondere soll ein Verfahren und/oder eine Vorrichtung angegeben werden, das es ermöglicht, solche Differenzen bereits in demjenigen Arbeitszyklus zu berücksichtigen, in dem sie erstmalig erfaßt werden.

Diese Aufgabe wird gelöst, indem bei einem Verfahren und/oder einer Vorrichtung zur Abschätzung von Druck- und/oder Volumenänderungen mit Hilfe eines Hydraulikmodells in einem Hydrauliksystem mit zwei peripheren Volumenspeichern, die durch je ein Ventil mit einem zentralen Volumenspeicher verbunden sind, der Abschätzung wenigstens zeitweise ein Modell zugrundegelegt wird, in dem eine direkte Verbindung der peripheren Volumenspeicher existiert, unabhängig davon, ob zeitgleich die peripheren Volumenspeicher direkt miteinander verbunden sind. Dieses Verfahren ist sowohl auf Hydrauliksysteme anwendbar, bei denen eine direkte Verbindung zwischen den peripheren Volumenspeichern, etwa über ein Ventil, herstellbar ist, als auch auf solche, die eine solche Verbindungsmöglichkeit nicht aufweisen.

Das Verfahren wird zyklisch ausgeführt, wobei vorzugsweise in jedem Zyklus

a) der Druck in jedem Volumenspeicher ermittelt wird,

b) für jeden peripheren Volumenspeicher anhand einer Druckdifferenz zwischen diesem peripheren und dem zentralen Volumenspeicher ein Volumenstrom zwischen diesem peripheren und dem zentralen Volumenspeicher berechnet wird,

c) falls die direkte Verbindung zwischen den peripheren Volumenspeichern zugrunde gelegt wird, anhand einer Druckdifferenz zwischen den peripheren Volumenspeichern ein Volumenstrom zwischen den peripheren Volumenspeichern berechnet wird,

d) die Drücke am Ende des Zyklus anhand der berechneten Volumenströme abgeschätzt werden.

Dabei wird zweckmäßigerweise in Schritt b) jeder Volumenstrom anhand des Durchgangsbeiwerts oder Durchgangswiderstands des von dem betreffenden Strom durchströmten Ventils berechnet. Der Volumenstrom über die "fiktive" Verbindung zwischen den peripheren Volumenspeichern wird in Schritt c) vorzugsweise anhand der Summe der Durchgangswiderstände der Ventile berechnet, die die peripheren mit dem zentralen Volumenspeicher verbinden.

Weitere Merkmale und Vorteile der Erfindung ergeben sich aus der nachfolgenden Beschreibung eines Ausführungsbeispiels mit Bezug auf die Figuren. Es zeigen:

Fig. 1    ein Hydrauliksystem eines Kraftfahrzeugs;

Fig. 2    ein herkömmliches Modell des Hydrauliksystems;

Fig. 3    ein erfindungsgemäßes Modell des Hydrauliksystems;

Fig. 4    ein Flußdiagramm des erfindungsgemäßen Verfahrens; und

Fig. 5    ein zweites Beispiel für ein Hydrauliksystem eines Kraftfahrzeugs, bei dem das erfindungsgemäße Verfahren anwendbar ist.

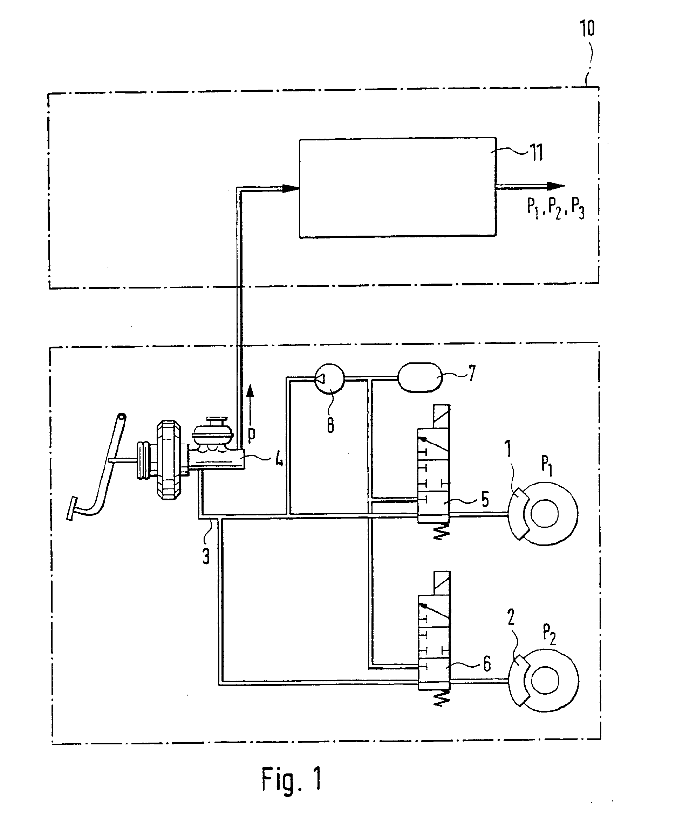

Das in Fig. 1 gezeigte Hydrauliksystem ist Teil eines Bremssystems eines Kraftfahrzeugs. Es umfaßt einen Hauptbremszylinder 4, eine Druckleitung 3 als zentralen Volumenspeicher sowie vier Radbremskammern als periphere Volumenspeicher, von denen nur zwei (1, 2) in der Figur dargestellt sind. Die Druckleitung 3 erstreckt sich vom Hauptbremszylinder 4 zu Dreistellungsventilen 5, 6, die jeweils einer der Radbremskammern zugeordnet sind, die in einer ersten Stellung die Druckleitung 3 mit der Radbremskammer 1 oder 2 verbinden, in einer zweiten Stellung sperren und in ihrer dritten Stellung die zugeordnete Radbremskammer mit einem Bremsflüssigkeitsreservoir 7 verbinden. Eine Pumpe 8 fördert Bremsflüssigkeit aus dem Reservoir zurück in den Hauptbremszylinder.

Eine Steuereinrichtung 10 beinhaltet eine Modellschaltung 11, deren Aufgabe es ist, die Drücke $p_1$, $p_2$ und $p_3$ in den Radbremskammern und der Druckleitung anhand eines Modells für den Ablauf eines Bremsvorgangs abzuschätzen. Hierzu verwendet sie den Meßwert p des Drucks im Hauptbremszylinder 4. Diese Abschätzung dient als Grundlage für eine darauf folgende Berechnung derjenigen Öffnungsdauern der Dreistellungsventile 5, 6, die für optimale Bremsdrücke in den Radbremskammern sorgen.

Auf das in Fig. 2 gezeigte Modell des Hydrauliksystems aus Fig. 1 wurde oben bereits eingegangen. Es entspricht der geometrischen Struktur des realen Hydrauliksystems: Volumenspeicher 1, 2, 3, charakterisiert durch ihre jeweiligen Drücke und Volumina $p_1$, $p_2$ und $p_3$ bzw. $V_1$, $V_2$ und $V_3$, sind durch Ventile 5, 6 verbunden, die durch ihre jeweiligen Blendenbeiwerte $\alpha_5$, $\alpha_6$ und Querschnittsflächen $A_5$, $A_6$ charakterisiert sind. Der Volumenstrom zwischen zentralem und peripheren Volumenspeichern läßt sich anhand der Bernoulli-Formel berechnen:

$$q_{3i} = \alpha_j * A_j * (2/\rho)^{\frac{1}{2}} * (p_3 - p_i)^{\frac{1}{2}},$$

wobei i, j = 1, 5 oder 2, 6 und $\rho$ die Dichte der Bremsflüssigkeit ist.

Das im erfindungsgemäßen Verfahren eingesetzte Modell ist in Fig. 3 gezeigt. Es umfaßt dieselben Komponenten wie das Modell aus Fig. 2, die gleich bezeichnet und nicht erneut beschrieben werden. Zusätzlich dazu ist im Modell aus Fig. 3 eine "fiktive" direkte Verbindung 14 zwischen den beiden peripheren Speichern 1 und 2 vorgesehen. Das fiktive Ventil 15 in dieser Leitung wird immer dann als offen angenommen, wenn beide realen Ventile 5 und 6 offen sind, d. h. wenn ein Volumenaustausch zwischen den peripheren Speichern 1, 2 über den zentralen 3 möglich ist. Der Strömungswiderstand, dem ein Volumenstrom auf der fiktiven Leitung ausgesetzt ist, entspricht dem Gesamtströmungswiderstand des realen Hydrauliksystems zwischen den zwei peripheren Speichern 1, 2, was angenähert dem Gesamtströmungswiderstand der Ventile 5, 6 entspricht. Zur Modellierung des Volumenstroms zwischen den Speichern 1 und 2 wird deshalb die Bernoulli-Formel in der Form

$$q_{12} = (1/\alpha_5 A_5 + 1/\alpha_6 A_6)^{-1} * (2/\rho)^{\frac{1}{2}} * (p_1 - p_2)^{\frac{1}{2}}$$

angewendet.

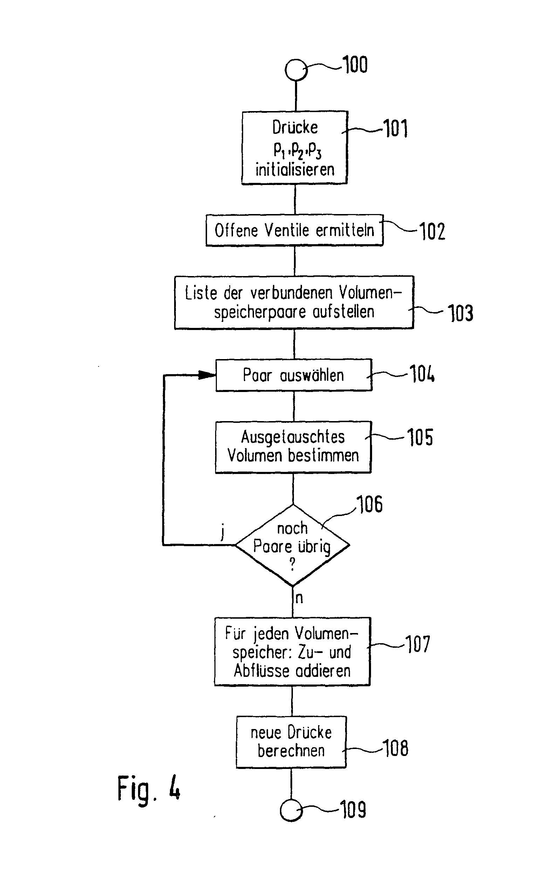

Fig. 4 zeigt ein detailliertes Flußdiagramm eines erfindungsgemäßen Verfahrens. Vor Beginn eines Bremsvorgangs sind die Drücke im Bremskreis und den Radbremskammern gleich dem im Hauptbremszylinder und können gleich 0 (Atmosphärendruck) angenommen werden. In einem ersten Schritt 101 des Verfahrens weist deshalb die Modellschaltung den Volumenspeichern 1, 2 3 jeweils gleiche Anfangsdrücke $p_1$, $p_2$, $p_3$ zu. Anschließend ermittelt sie, welche der Ventile 5, 6 offen sind (Schritt 102). In einer Anfangsphase des Bremsvorgangs, in der Druck in den Radbremskammern aufgebaut wird, werden regelmäßig alle Ventile 5, 6 offen sein. In einer späteren Phase, in der das Bremskraftregelsystem in den Bremsvorgang eingreift, kommt es aber regelmäßig vor, daß wenigstens eines der Ventile geschlossen ist, um die Bremskraft des zugehörigen Rades zu begrenzen. Mit Hilfe dieser Information erstellt die Modellschaltung in Schritt 103 eine Liste aller miteinander verbundenen Paare von Volumenspeichern. Sind alle Ventile geschlossen, so ist die Liste leer. Ist z. B. nur das Ventil 5 offen, so enthält die Liste das Paar (1, 2). Sind beide Ventile 5, 6 offen, so enthält die Liste die Paare (1, 2), (1, 3) und (2,3).

In einer Schleife mit den Schritten 104 bis 106 wird der Reihe nach jedes Paar der Liste ausgewählt und anhand der in Schritt 101 ermittelten Drücke nach der Bernoulli-Formel der Volumenstrom zwischen den Speichern des Paars und daraus durch Multiplikation mit der Dauer des Zyklus (oder ggf. einer Öffnungsdauer des zugeordneten Ventils, falls diese kleiner als die Zyklusdauer ist) das zwischen den Speichern ausgetauschte Volumen berechnet (Schritt 105).

Wenn alle Paare in dieser Weise bearbeitet sind, wird in Schritt 107 für jeden Volumenspeicher die Summe der zu- und abgeflossenen Volumina berechnet. Anschließend wird in Schritt 108 für jeden Volumenspeicher anhand eines bekannten Anfangsvolumens zu Beginn des Zyklus, der aus den in Schritt 101 ermittelten Druck mit Hilfe einer in der Modellschaltung abgespeicherten Druck-Volumen-Kennlinie des betreffenden Volumenspeichers erhalten sein kann, und des in Schritt 107 berechneten ausgetauschten Volumens das Volumen des Speichers am Zyklusende und daraus, abermals mit Hilfe der Druck-Volumen-Kennlinie, der Druck des Speichers am Zyklusende bestimmt.

Damit ist ein Zyklus des erfindungsgemäßen Verfahrens beendet. Die erhaltenen Druckwerte können von der Steuerschaltung 10 zur Steuerung der Ventile oder des Drucks im Hauptbremszylinder mit Hilfe der Förderpumpe 8 herangezogen werden.

In jedem darauffolgenden Zyklus bis zum Ende des Bremsvorgangs wird das Verfahren ab Schritt 102 wiederholt, wobei in jedem Zyklus die in Schritt 108 des vorhergehenden Zyklus berechneten Drücke als Drücke $p_1$, $p_2$, $p_3$ eingesetzt werden.

Bei einer Alternative des Verfahrens kann vorgesehen werden, daß nur diejenigen Paare von Volumenspeichern in die Liste aufgenommen werden, deren Drücke sich unterscheiden oder um mehr als einen vorgegebenen Mindestwert voneinander abweichen.

Erweiterungen des hier beschriebenen Verfahrens auf Systeme mit mehr als zwei peripheren Volumenspeichern sind ohne weiteres möglich. Für jeden zusätzlichen Volumenspeicher erhöht sich lediglich die Zahl der in Schritt 101 zu initialisierenden Drücke um einen, und die in Schritt 103 aufgestellte Liste der Paare von verbundenen Volumenspeichern kann sich verlängern.

Das Verfahren ist auch nicht auf Hydrauliksysteme mit einer Sternkonfiguration aus einem zentralen und mehreren peripheren Speichern beschränkt. Grundsätzlich kann die Topologie des Hydrauliksystems beliebig sein. Insbesondere können mit dem erfindungsgemäßen Verfahren auch Systeme mit einer Vielzahl von in Reihe geschalteten Volumenspeichern modelliert werden, was bisher aufgrund des oben geschilderten Problems der langen Reaktionszeit bisheriger Modelle nicht praktikabel war.

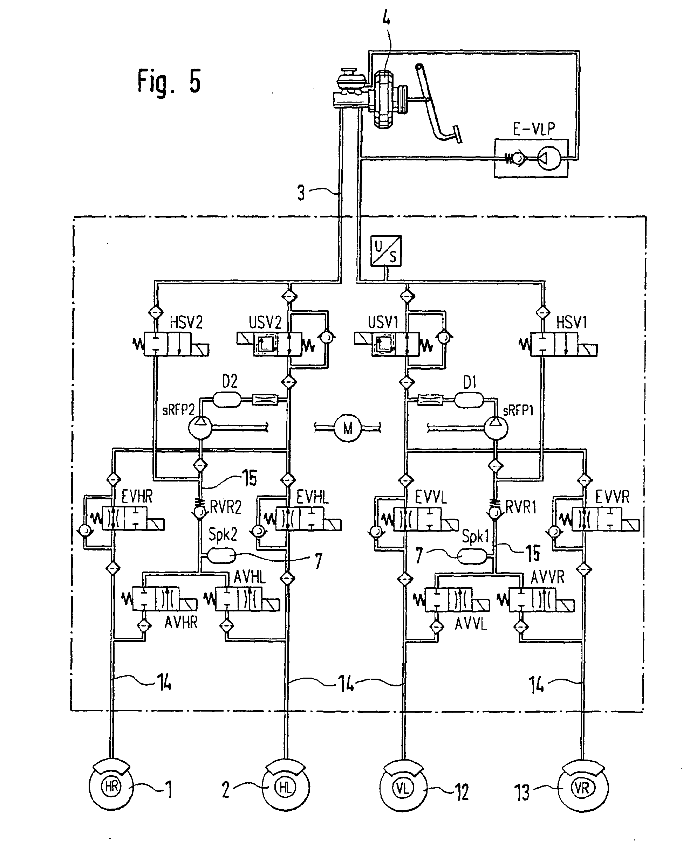

Ein Beispiel eines konkreten Hydrauliksystems, an dem das erfindungsgemäße Verfahren anwendbar ist, zeigt Fig. 5. Dieses System ist ein Kraftfahrzeug-Bremssystem, das zur Anwendung in Zusammenhang mit einer Antiblockierregelung oder allgemein einer Fahrdynamikregelung geeignet ist. Es umfaßt einen Hauptbremszylinder 4, von dem aus sich zwei Hochdruckleitungen 3 über im in der Figur gezeigten Ruhezustand offene Umschaltventile USV1, USV2 zu vier Einlaßventilen EVHR, EVHL, EVVL, EVVR erstrecken. Die Einlaßventile sind sogenannte 2/2-Magnetventile, auch sie sind im Ruhezustand offen. Die Bremskammern 1, 2, 12, 13 der vier Räder HR, HL, VL, VR sind über Leitungsstücke 14 jeweils an den Ausgang des zugeordneten Einlaßventils sowie einen Eingang eines zugeordneten Auslaßventils AVHR, AVHL, AVVL, AVVR angeschlossen. Die Auslaßventile sind ebenfalls 2/2-Magnetventile, sie sind im Ruhezustand geschlossen, ihre Ausgänge münden auf zwei Niederdruckleitungen 5, eine für die vorderen und eine für die hinteren Räder des Kraftfahrzeugs. Jede Niederdruckleitung 15 umfaßt eine Speicherkammer 7 und ist an eine Förderpumpe sRFP1, sRFP2 angeschlossen, die Bremsfluid aus der Niederdruckleitung 5 in die Hochdruckleitung 3 fördert. Wenn der Volumendurchsatz der Förderpumpe(n) im Verhältnis zu den Durchsätzen der Ventile EVHR, EVHL, EVVL, EVVR, AVHR, AVHL, AVVL, AVVR im durchströmten Zustand gering ist, können durch ihn verursachte Volumen- oder Druckänderungen in den Hoch- und Niederdruckleitungen im Rahmen des Modells vernachlässigt werden. Es ist aber auch möglich, den a priori bekannten Durchsatz der Förderpumpe(n) im Rahmen der Volumen-Zu- und Abflußbilanz für jeden Volumenspeicher in Schritt 107 des oben in Verbindung mit Fig. 4 beschriebenen Verfahrens zu berücksichtigen.

Eine Steuerschaltung (nicht dargestellt) steuert einzeln den Schaltzustand jedes Ein- und Auslaßventils durch selektives Erregen von dessen Elektromagnet.

Bei Betätigung des Bremspedals durch den Fahrer erhöht sich der Druck im Hauptbremszylinder 4 und infolgedessen, über die offenen Einlaßventile, auch in den Radbremskammern 5, 6, 12, 13. Wenn die Steuerschaltung mit Hilfe eines angeschlossenen Sensors das drohende Blockieren eines Rades, etwa des Rades HR, erfaßt, schaltet sie Ein- und Auslaßventil EVHR bzw AVHR aus ihrem Ruhezustand in einen aktiven Zustand, in dem das Einlaßventil EVHR sperrt und das Auslaßventil AVHR sich öffnet, so daß der Druck in der Radbremskammer 1 des Rades HR wieder abfällt.

Nachdem die Steuerschaltung infolge des nachlassenden Bremsdrucks wieder das freie Drehen des Rades erfaßt, schließt sie das Auslaßventil wieder und erhöht durch kurzzeitiges Öffnen des Einlaßventils stufenweise wieder den Druck in der Radbremskammer, solange bzw. so oft, bis erneut drohendes Blockieren erfaßt wird.

Beim Bremsen eines Fahrzeugs kommt es häufig zu Situationen, z. B. beim Bremsen in einer Kurve oder bei unterscchiedlichen Eigenschaften des Untergrunds unter den einzelnen Rädern, wo die verschiedenen Räder bei unterschiedlichen Drücken in den Radkammern zu blockieren beginnen. Eine individuelle Regelung der Drücke in jeder Radbremskammer führt dazu, daß im Laufe des Bremsmanövers unterschiedliche Drücke in den einzelnen Radbremskammern auftreten können. Nimmt man an, daß sich die Drücke in den Radbremskammern 1 und 2 unterscheiden, so ist das Verfahren zum einen bei offenen Einlaßventilen EVHR, EVHL anwendbar, wobei in diesem Fall der Hauptbremszylinder 4 und die Hochdruckleitung 3 den zentralen Volumenspeicher und die Radbremskammern 1, 2 mit den jeweiligen Leitungsstücken 14 periphere Volumenspeicher bilden. Zum anderen ist das Verfahren aber auch bei geschlossenen Einlaßventilen und offenen Auslaßventilen AVHR, AVHL anwendbar, wobei in diesem Fall die Niederdruckleitung 15 und das Bremsflüssigkeitsreservoir 7 die Funktion des zentralen Volumenspeichers übernehmen.

## Patentansprüche

1. Verfahren zur Abschätzung von Druck- und/oder Volumenänderungen in einem Hydrauliksystem mit zwei peripheren Volumenspeichern (1, 2), die durch je ein Ventil (5, 6) mit einem zentralen Volumenspeicher (3) verbunden sind, mit Hilfe eines Hydraulikmodells, **dadurch gekennzeichnet, daß** der Abschätzung wenigstens zeitweise ein Modell zugrundegelegt wird, in dem eine direkte Verbindung (14) der peripheren Volumenspeicher (1, 2) existiert, unabhängig davon, ob zeitgleich die peripheren Volumenspeicher (1, 2) direkt miteinander verbunden sind oder nicht.

2. Verfahren nach Anspruch 1, **dadurch gekennzeichnet, daß** das Hydrauliksystem keine direkte Verbindung zwischen den peripheren Volumenspeichern (1, 2) aufweist.

3. Verfahren nach Anspruch 1 oder 2, **dadurch gekennzeichnet, daß** das Modell mit der direkten Verbindung (14) dann zugrunde gelegt wird, wenn die Ventile (5, 6) beider peripherer Volumenspeicher (1, 2) geöffnet sind.

**4.** Verfahren nach einem der vorhergehenden Ansprüche, **dadurch gekennzeichnet, daß** das Modell mit der direkten Verbindung dann zugrunde gelegt wird, wenn ferner die Drücke in den peripheren Volumenspeichern (1, 2) unterschiedlich sind.

**5.** Verfahren nach einem der vorhergehenden Ansprüche, **dadurch gekennzeichnet, daß** es zyklisch ausgeführt wird, wobei in jedem Zyklus

a) ein Anfangsdruck ($p_1$, $p_2$, $p_3$) in jedem Volumenspeicher (1, 2, 3) angenommen wird,
b) für jeden peripheren Volumenspeicher (1, 2) anhand einer Differenz der Drücke dieses peripheren und des zentralen Volumenspeichers (3) ein Volumenstrom zwischen diesem peripheren und dem zentralen Volumenspeicher berechnet wird,
c) falls das Modell mit der direkten Verbindung (14) zwischen den peripheren Volumenspeichern (1, 2) zugrunde gelegt wird, anhand einer Druckdifferenz zwischen den peripheren Volumenspeichern (1, 2) ein Volumenstrom zwischen den peripheren Volumenspeichern berechnet wird,
d) die Drücke in den Volumenspeichern am Ende des Zyklus anhand der berechneten Volumenströme abgeschätzt werden.

**6.** Verfahren nach Anspruch 5, **dadurch gekennzeichnet, daß** in Schritt b) jeder Volumenstrom anhand des Durchgangsbeiwerts oder Durchgangswiderstands des durchströmten Ventils (5, 6) berechnet wird, und daß in Schritt c) der Volumenstrom anhand der Summe der Durchgangswiderstände der Ventile (5, 6) berechnet wird, die die peripheren mit dem zentralen Volumenspeicher verbinden.

**7.** Verfahren nach einem der Ansprüche 5 oder 6, bei dem in Schritt b) und/oder c) die Bernoulli-Gleichung eingesetzt wird.

**8.** Verfahren nach einem der Ansprüche 5 bis 7, bei dem die in Schritt d) eines Zyklus abgeschätzten Drücke als Anfangsdrücke in Schritt a) des darauffolgenden Zyklus angenommen werden.

**9.** Verfahren nach einem der vorhergehenden Ansprüche, bei dem das Volumen des zentralen Volumenspeichers kleiner ist als das jedes peripheren Volumenspeichers.

**10.** Verfahren nach einem der vorhergehenden Ansprüche, bei dem der zentrale Volumenspeicher eine Druckleitung eines Bremskreises eines Kraftfahrzeugs ist und die peripheren Volumenspeicher durch jeweils eine Bremskammer eines Rades des Kraftfahrzeugs gebildet sind.

**11.** Vorrichtung, die mittel aufweist, die dazu ausgelegt sind ein Verfahren nach wenigstens einem der vorhergehenden Ansprüche auszuführen.

**Claims**

**1.** Method for estimating pressure changes and/or volume changes in a hydraulic system having two peripheral volume accumulators (1, 2), which are each connected by a respective valve (5, 6) to a central volume accumulator (3), with the aid of a hydraulic model, **characterized in that** the estimation is based at least at times on a model in which there is a direct connection (14) of the peripheral volume accumulators (1, 2), irrespective of whether or not the peripheral volume accumulators (1, 2) are at the same time directly connected to one another.

**2.** Method according to Claim 1, **characterized in that** the hydraulic system has no direct connection between the peripheral volume accumulators (1, 2).

**3.** Method according to Claim 1 or 2, **characterized in that** the model having the direct connection (14) is used as a basis when the valves (5, 6) of both peripheral volume accumulators (1, 2) are open.

**4.** Method according to one of the preceding claims, **characterized in that** the model having the direct connection is used as a basis when, in addition, the pressures in the peripheral volume accumulators (1, 2) are different.

**5.** Method according to one of the preceding claims, **characterized in that** it is carried out cyclically, where, in each cycle:

a) an initial pressure ($p_1$, $p_2$, $p_3$) is assumed in each volume accumulator (1, 2, 3),

b) for each peripheral volume accumulator (1, 2), a volume flow between said peripheral volume accumulator (1, 2) and the central volume accumulator (3) is calculated on the basis of a pressure difference between said peripheral volume accumulator and the central volume accumulator,

c) if the model having the direct connection (14) between the peripheral volume accumulators (1, 2) is used as a basis, a volume flow between the peripheral volume accumulators (1, 2) is calculated on the basis of a pressure difference between the peripheral volume accumulators,

d) the pressures in the volume accumulators at the end of the cycle are estimated on the basis of the calculated volume flows.

6. Method according to Claim 5, **characterized in that** in step b), each volume flow is calculated on the basis of the throughflow coefficient or throughflow resistance of the valve (5, 6) through which flow passes, and **in that** in step c), the volume flow is calculated on the basis of the sum of the throughflow resistances of the valves (5, 6) which connect the peripheral volume accumulators to the central volume accumulator.

7. Method according to one of Claims 5 or 6, in which the Bernoulli equation is used in step b) and/or step c).

8. Method according to one of Claims 5 to 7, in which the pressures estimated in step d) of one cycle are assumed as initial pressures in step a) of the following cycle.

9. Method according to one of the preceding claims, in which the volume of the central volume accumulator is smaller than that of each of the peripheral volume accumulators.

10. Method according to one of the preceding claims, in which the central volume accumulator is a pressure line of a brake circuit of a motor vehicle and the peripheral volume accumulators are each formed by a respective brake chamber of a wheel of the motor vehicle.

11. Device having means which are designed to carry out the method according to at least one of the preceding claims.

**Revendications**

1. Procédé d'estimation de variations de pression et/ou de volume dans un système hydraulique avec deux accumulateurs volumétriques (1, 2) périphériques reliés par respectivement une soupape (5, 6) à un accumulateur volumétrique (3) central, à l'aide d'un modèle hydraulique,
**caractérisé en ce que**
l'estimation est au moins temporairement basée sur un modèle dans lequel il existe une liaison directe (14) des accumulateurs volumétriques (1, 2) périphériques, indépendamment du fait que les accumulateurs volumétriques (1, 2) périphériques soient en même temps directement reliés l'un à l'autre ou non.

2. Procédé selon la revendication 1,
**caractérisé en ce que**
le système hydraulique ne présente pas de liaison directe entre les accumulateurs volumétriques (1, 2) périphériques.

3. Procédé selon la revendication 1 ou 2,
**caractérisé en ce que**
le modèle avec la liaison directe (14) est utilisé lorsque les soupapes (5, 6) des deux accumulateurs volumétriques (1, 2) périphériques sont ouvertes.

4. Procédé selon l'une quelconque des revendications précédentes,
**caractérisé en ce que**
le modèle avec la liaison directe est utilisé lorsque par ailleurs les pressions dans les accumulateurs volumétriques (1, 2) périphériques sont différentes.

5. Procédé selon l'une quelconque des revendications précédentes,
**caractérisé en ce qu'**
il est exécuté cycliquement, et dans chaque cycle

a) chaque accumulateur volumétrique (1, 2, 3), reçoit une pression initiale ($p_1$, $p_2$, $p_3$)

b) pour chaque accumulateur volumétrique (1, 2) périphérique, on calcule un débit volumétrique entre cet accumulateur périphérique et l'accumulateur volumétrique central, à l'aide d'une différence des pressions de cet accumulateur périphérique et de l'accumulateur volumétrique (3) central,

c) si le modèle avec la liaison directe (14) entre les accumulateurs volumétriques (1, 2) périphériques est utilisé, on calcule un débit volumétrique entre les accumulateurs volumétriques périphériques à l'aide d'une différence de pression entre les accumulateurs volumétriques (1, 2) périphériques, et

d) on estime à la fin du cycle, à l'aide des débits volumétriques calculés, les pressions dans les accumulateurs volumétriques.

6. Procédé selon la revendication 5,
**caractérisé en ce qu'**
à l'étape b), chaque débit volumétrique est calculé à l'aide du facteur de correction de passage ou de la résistance traversante de la soupape (5, 6) traversée, et à l'étape c) le débit volumétrique est calculé à l'aide de la somme des résistances traversantes des soupapes (5, 6) qui relient les accumulateurs périphériques à l'accumulateur volumétrique central.

7. Procédé selon l'une quelconque des revendications 5 ou 6,
**caractérisé en ce qu'**
à l'étape b) et/ou c) on utilise l'équation de Bernoulli.

8. Procédé selon l'une quelconque des revendications 5 à 7,
dans lequel les pressions estimées à l'étape d) d'un cycle sont reçues comme pressions initiales à l'étape a) du cycle suivant.

9. Procédé selon l'une quelconque des revendications précédentes,
dans lequel le volume de l'accumulateur volumétrique central est inférieur à celui de chaque accumulateur volumétrique périphérique.

10. Procédé selon l'une quelconque des revendications précédentes,
dans lequel l'accumulateur volumétrique central est une conduite de pression d'un circuit de freinage d'un véhicule automobile et les accumulateurs volumétriques périphériques sont chacun formés par une chambre de freinage d'une roue du véhicule automobile.

11. Dispositif qui présente des moyens conçus pour la mise en oeuvre d'un procédé selon au moins l'une des revendications précédentes.

Fig. 1

Fig. 2

Fig. 3

100

Drücke
$P_1, P_2, P_3$
initialisieren —101

Offene Ventile ermitteln —102

Liste der verbundenen Volumen-
speicherpaare aufstellen —103

Paar auswählen —104

Ausgetauschtes
Volumen bestimmen —105

106
noch
Paare übrig
?

j

n

Für jeden Volumenspeicher: Zu- und
Abflüsse addieren —107

neue Drücke
berechnen —108

Fig. 4

109

Fig. 5